# EUROPÄISCHE PATENTSCHRIFT

(11) **EP 1 298 413 B1**
(45) Veröffentlichungstag und Bekanntmachung des Hinweises auf die Patenterteilung: **25.10.2006**
(21) Anmeldenummer: 01810947.0
(22) Anmeldetag: 28.09.2001
(51) Int. Cl.: G01C 15/00, G01C 15/10

(54) **Selbstnivellierender Baulaser**
Self leveling construction laser
Laser auto-nivellant pour la construction

(43) Veröffentlichungstag der Anmeldung: 02.04.2003
(73) Patentinhaber: HILTI Aktiengesellschaft, 9494 Schaan (LI)
(72) Erfinder: Waibel, Reinard, 9442 Berneck (CH)
(74) Vertreter: Wildi, Roland

(56) Entgegenhaltungen:
- DE-A- 19 814 151

## Beschreibung

Die Erfindung bezeichnet einen selbstnivellierenden Baulaser zur Erzeugung eines optischen Lotstrahls oder Nivellierstrahls.

Übliche, sich in einem begrenzten Nivellierbereich von ca. +/- 5° unter dem Einfluss der Schwerkraft, selbstnivellierende Baulaser weisen ein Gehäuse und ein daran reibungsarm drehbar befestigtes selbstnivellierendes elektrooptisches System zur Erzeugung eines senkrechten und/oder waagerechten punktförmigen und/oder linienförmigen sichtbaren Laserstrahls auf.

Im Unterschied zur Präzisionsvermessungstechnik sind im rauhen Umfeld des Bauhauptgewerbes zubehörfreie, einstückige Baulaser mit kompakten Gehäuseformen und fallbeständigem Stossschutz üblich. Die oftmals bestehende Notwendigkeit der Nutzung des Baulasers auf stark geneigten Unterlagen sowie direkt an Wänden und Decken führt üblicherweise zu provisorischen Hilfskonstruktionen zur Herstellung einer leicht geneigten Unterlage für die Auflagefläche des Baulasers. Ein Stativ sowie Sonderzubehör ist oft nicht unmittelbar verfügbar oder bereits verlorengegangen.

Nach der US3909952 weist ein optisches Lot, welches auf einer leicht geneigten Unterlage manuell mit Dosenlibellen nivelliert werden muss, eine innerhalb 0-90° drehrastbare Lichtquelle auf. Nach der JP10160471 ist ein kompaktes Seillot für das Baugewerbe temporär an Wänden und Decken befestigbar. Nach der US5012585 weist ein selbstnivellierender Baulaser an dem Gehäuse fest montierte Befestigungsmittel für eine Nutzung des Baulasers auf dem Boden bzw. an der Wand auf. Nach der US5784793 weist ein selbstnivellierender Baulaser ein kompaktes, für das selbstnivellierende elektrooptische System einen Ständer mit einer Auflagefläche ausbildendes, Gehäuse auf. Nach der US5144487 weist die Auflagefläche ein Befestigungsmittel für ein optionales Stativ zur Benutzung auf stark geneigten Unterlagen auf. Zudem ist der auf die Unterlage gerichtete Laserstrahl mittels eines von der Auflagefläche abgesetzten Austrittsfensters frei sichtbar.

Nach der DE19814151A1 weist ein Rotationsbaulaser zur Erzeugung eines Nivellierstrahls mit einem sich innerhalb eines selbstnivellierenden Nivellierbereiches selbsttätig nach der Schwerkraft ausrichtenden elektrooptischen Systems zur Erzeugung eines rotierenden, optischen Lichtstrahls ein kompaktes Gehäuse auf, an welchem ein Ständer für das Aufsetzen auf eine Unterlage permanent befestigt ist, wobei der Ständer um eine virtuelle Schwenkachse senkrecht zum Lichtstrahl in einem Winkelbereich von ca. 40° stetig drehschwenkbar arretierbar ist.

Die Aufgabe der Erfindung besteht in der Realisierung eines für das rauhe Umfeld des Bauhauptgewerbes ausgelegten, kompakten Baulasers, welcher auch auf stark geneigten

Unterlagen sowie direkt an Wänden und Decken nutzbar ist. Ein weiterer Aspekt besteht in der Möglichkeit der einfachen und exakten Positionierung des Baulasers selbst bezüglich einer Markierung auf der Unterlage.

Die Aufgabe wird im wesentlichen durch die Merkmale der unabhängigen Ansprüche gelöst. Vorteilhafte Weiterbildungen ergeben sich aus den abhängigen Ansprüchen.

Im wesentlichen weist ein selbstnivellierender Baulaser in einem kompakten Gehäuse ein sich innerhalb eines selbstnivellierenden Nivellierbereiches selbsttätig nach der Schwerkraft ausrichtendes elektrooptisches System zur Erzeugung zumindest eines lotrechten und/oder waagerechten, zumindest in einer Dimension stark fokussierten, sichtbaren Lichtstrahls auf, wobei für das Aufsetzen auf eine Unterlage an dem Gehäuse ein Ständer permanent befestigt ist, welcher um zumindest eine Schwenkachse senkrecht zum Lichtstrahl in einem Winkelbereich von mindestens 180° stetig oder, in vom selbstnivellierenden Nivellierbereich umfassten Winkelschritten, diskret drehschwenkbar arretierbar ist.

Dabei ist die Schwenkachse vom Mittelpunkt zweier gegenüberliegender Seitenflächen des Gehäuses beabstandet angeordnet, wodurch bezüglich des auf einer Unterlage aufgesetzten Ständers bei einem Herausschwenken des Gehäuses um 180° eine Positionsänderung der Lage der jeweils unteren Seitenfläche gegenüber der Unterlage erzielt wird.

Durch ein derartiges Herausschwenken des Gehäuses von der Transportstellung in die Nutzungsstellung ist die untere Seitenfläche stets freiliegend und ein durch diese heraustretender Lichtstrahl ist selbst durch seinen sichtbaren Auftreffpunkt auf der Unterlage zur einfachen und exakten Positionierung des Baulasers benutzbar.

Durch den permanent befestigten drehschwenkbar arretierbaren Ständer ist der Baulaser jederzeit auch auf stark geneigten Unterlagen benutzbar, indem dieser einfach auf den Ständer aufgestellt und über Augenmass bis in den selbstnivellierenden Bereich grob vornivelliert wird.

Vorteilhaft ist der Winkelbereich grösser als ein Vielfaches von 90° bis einschliesslich zum Vollkreis, wodurch eine temporäre Befestigung an Wänden und Decken über den Ständer möglich ist.

Vorteilhaft ist die Schwenkachse des Ständers begrenzt verschiebbar im Gehäuse angeordnet, wodurch der Abstand des sichtbaren Auftreffpunktes zur Seitenfläche vergrössert und somit die freie Sichtbarkeit verbessert werden kann.

Vorteilhaft ist der Ständer reibkraftschlüssig selbsthemmend mit dem Gehäuse verbunden, wodurch eine Arretierung der Vornivellierung technologisch einfach realisiert ist.

Vorteilhaft ist der Ständer bezüglich der Schwenkachse beidseitig des Gehäuses angeordnet, wodurch der Ständer zugleich einen Schutzrahmen gegen stumpfe Schlagbeanspruchung ausbildet.

Vorteilhaft ist der Ständer senkrecht zur Schwenkachse einseitig bzw. doppelseitig plattenförmig ausgebildet und deckt weiter vorteilhaft in zumindest einer Schwenkposition das Gehäuse längs der Schwenkachse ab, wodurch der Ständer zugleich eine Schutzplatte gegen spitze Schlagbeanspruchung ausbildet.

Vorteilhaft ist der Ständer aus einem formstabilen, schlagzähen, energieabsorbierenden Material wie Hartgummi oder Plastikkunststoff gefertigt, wodurch ein aufgenommener Schlag im Material des Ständers dissipiert wird.

Vorteilhaft weist der Ständer Befestigungsmittel für eine temporäre Montage auf, bspw. Innengewindebuchsen, Durchgangslöcher, Hinterschneidungen.

Die Erfindung wird bezüglich eines vorteilhaften Ausführungsbeispiels näher erläutert mit:
Fig. 1 als Baulaser
Fig. 2 als Befestigungsvariante
Fig. 3 als Befestigungsvariante
Fig. 4 als Ständervariante

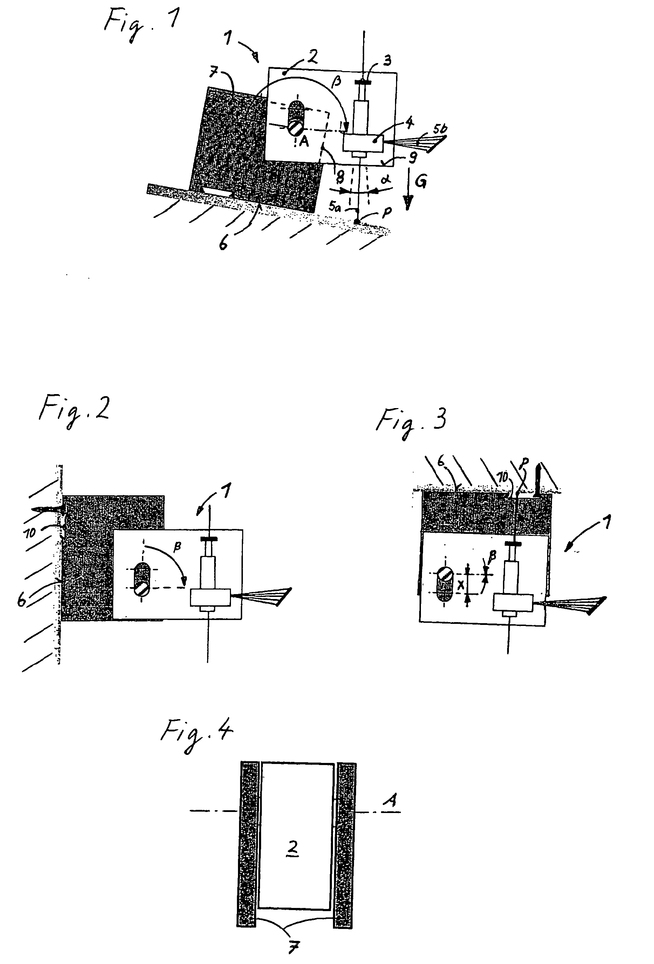

Nach Fig. 1 weist ein selbstnivellierender Baulaser 1 in einem kompakten Gehäuse 2 ein sich durch eine Pendelaufhängung 3 innerhalb eines selbstnivellierenden Nivellierbereiches α selbsttätig nach der Schwerkraft G ausrichtendes elektrooptisches System 4 zur Erzeugung eines lotrechten punktförmig fokussierten sichtbaren Lichtstrahls 5a und eines waagerechten, in einem Sektor linienförmig fokussierten, sichtbaren Lichtstrahls 5b in Form zweier Laserstrahlen auf. Für das Aufsetzen auf eine stark geneigte Unterlage 6 ist an dem Gehäuse 2 einseitig ein Ständer 7 permanent befestigt. Das Gehäuse 2 ist von der Transportstellung 8, bei welcher der plattenförmige Ständer 7 das Gehäuse 2 abdeckt, senkrecht zum Lichtstrahl 5a, 5b um eine, in einem Langloch im Gehäuse 2 begrenzt verschiebbare, Schwenkachse A im Winkelbereich β von etwa 180° in die Nutzstellung herausgeschwenkt arretiert. Durch die vom Seitenmittelpunkt des Gehäuses 2 beabstandet angeordnete Schwenkachse A liegt die untere Seitenfläche 9 frei und ein durch diese heraustretender Lichtstrahl 5a ist in einem Auftreffpunkt P auf der Unterlage 6 sichtbar.

Nach Fig. 2 ist der Baulaser 1 über ein als Hinterschnitt ausgebildetes Befestigungsmittel 10 an einem Nagel in der, die Unterlage 6 bildenden, Wand befestigt. Der herausgeschwenkte Winkelbereich β beträgt etwa 90°.

Nach Fig. 3 ist der Baulaser 1 über ein als Hinterschnitt ausgebildetes Befestigungsmittel 10 an einem Nagel in der, die Unterlage 6 bildenden, Decke befestigt. Das Gehäuse 2 ist gegenüber dem Ständer 7 um einen Abstand x verschoben, wobei der herausgeschwenkte Winkelbereich β etwa 0° beträgt.

Nach Fig. 4 ist der plattenförmige Ständer 7 bezüglich der Schwenkachse A beidseitig des Gehäuses 2 angeordnet und besteht aus Hartgummi.

## Patentansprüche

1. Baulaser zur Erzeugung zumindest eines optischen Lotstrahls oder Nivellierstrahls mit einem sich innerhalb eines selbstnivellierenden Nivellierbereiches (α) selbsttätig nach der Schwerkraft (G) ausrichtenden elektrooptischen Systems (4) zur Erzeugung zumindest eines lotrechten und/oder waagerechten, zumindest in einer Dimension stark fokussierten, sichtbaren Lichtstrahls (5a, 5b) und einem kompakten Gehäuse (2), an welchem ein Ständer (7) für das Aufsetzen auf eine Unterlage (6) permanent befestigt ist, welcher um zumindest eine Schwenkachse (A) senkrecht zum Lichtstrahl (5a, 5b) in einem Winkelbereich (β) stetig oder, in vom selbstnivellierenden Nivellierbereich (α) umfassten Winkelschritten, diskret drehschwenkbar arretierbar ist, **dadurch gekennzeichnet, dass** das Gehäuse (2) in einem Winkelbereich (β) von mindestens 180° um eine im Gehäuse (2) angeordnete Schwenkachse (A) des Ständers (7) herausschwenkbar ist, wobei die Schwenkachse (A) vom Mittelpunkt zweier gegenüberliegender Seitenflächen des Gehäuses (2) beabstandet angeordnet ist.

2. Baulaser nach Anspruch 1, **dadurch gekennzeichnet, dass** die Schwenkachse (A) des Ständers (7) begrenzt verschiebbar im Gehäuse (2) angeordnet ist.

3. Baulaser nach einem der vorherigen Ansprüche, **dadurch gekennzeichnet, dass** der Ständer (7) reibkraftschlüssig selbsthemmend mit dem Gehäuse (2) verbunden ist.

4. Baulaser nach einem der vorherigen Ansprüche, **dadurch gekennzeichnet, dass** der Ständer (7) beidseitig des Gehäuses (2) längs der Schwenkachse (A) angeordnet ist.

5. Baulaser nach einem der vorherigen Ansprüche, **dadurch gekennzeichnet, dass** der Ständer (7) senkrecht zur Schwenkachse (A) einseitig bzw. doppelseitig plattenförmig ausgebildet ist und optional in zumindest einer Schwenkposition das Gehäuse (2) abdeckt.

6. Baulaser nach einem der vorherigen Ansprüche, **dadurch gekennzeichnet, dass** der Ständer (7) aus einem formstabilen, schlagzähen, energieabsorbierenden Material besteht.

7. Baulaser nach einem der vorherigen Ansprüche, **dadurch gekennzeichnet, dass** der Ständer (7) ein Befestigungsmittel (10) für eine temporäre Montage aufweist.

## Claims

1. Construction laser for generating at least one optical plumb beam or levelling beam having an electro-optical system (4) which automatically orients itself by gravity (G) within a self-levelling levelling range (α) for generating at least one vertical and/or horizontal visible light beam (5a, 5b) which is strongly focused in at least one dimension, and a compact housing (2) to which a stand (7) for placement on a support (6) is permanently attached, said stand being lockable continuously or discretely pivotable about at least one pivot axis (A) perpendicular to the light beam (5a, 5b) in an angular range (β) or in angular steps included within the self-levelling levelling range (α), **characterised in that** the housing (2) can be pivoted out in an angular range (β) of at least 180° about a pivot axis (A) of the stand (7) disposed within the housing (2), whereby the pivot axis (A) is disposed spaced apart from the central point of two mutually opposed side surfaces of the housing (2).

2. Construction laser according to claim 1, **characterised in that** the pivot axis (A) of the stand (7) is disposed within the housing (2) displaceable to a limited extent.

3. Construction laser according to one of the preceding claims, **characterised in that** the stand (7) is connected to the housing (2) frictionally engaged in self-impeding manner.

4. Construction laser according one of the preceding claims, **characterised in that** the stand (7) is disposed on both sides of the housing (2) along the pivot axis (A).

5. Construction laser according to one of the preceding claims, **characterised in that**, perpendicularly to the pivot axis (A), the stand (7) is designed plate-shaped on one or both sides and, optionally, covers the housing (2) in at least one pivot position.

6. Construction laser according to one of the preceding claims, **characterised in that** the stand (7) is made of a dimensionally stable, impact-resistant, energy-absorbing material.

7. Construction laser according to one of the preceding claims, **characterised in that** the stand (7) has attachment means (10) for temporary mounting.

## Revendications

1. Laser de bâtiment pour générer au moins un rayon optique d'aplomb ou de mise de niveau, avec un système électro-optique (4) s'orientant automatiquement suivant la force de gravité (G) à l'intérieur d'une plage autonivelante de mise de niveau (α) pour générer au moins un rayon lumineux visible vertical et/ou horizontal (5a, 5b) très focalisé au moins dans une dimension, et avec un boîtier compact (2) auquel est fixé en permanence un socle (7) pour le poser sur un support (6), ledit laser de bâtiment pouvant être immobilisé autour d'au moins un axe de pivotement (A) perpendiculairement au rayon lumineux (5a, 5b) dans une zone angulaire (β) avec une possibilité de pivotement continu ou discret par pas angulaires compris dans la plage autonivelante de mise de niveau (α), **caractérisé en ce que** le boîtier (2) peut pivoter dans une zone angulaire (β) d'au moins 180° autour d'un axe de pivotement (A) du socle (7) disposé dans le boîtier (2), l'axe de pivotement (A) se trouvant à distance du centre de deux surfaces latérales opposées du boîtier (2).

2. Laser de bâtiment selon la revendication 1, **caractérisé en ce que** l'axe de pivotement (A) du socle (7) est disposé dans le boîtier (2) avec une possibilité de déplacement limité.

3. Laser de bâtiment selon une des revendications précédentes, **caractérisé en ce que** le socle (7) est relié au boîtier (2) par friction et avec blocage automatique.

4. Laser de bâtiment selon une des revendications précédentes, **caractérisé en ce que** le socle (7) est disposé de part et d'autre du boîtier (2) le long de l'axe de pivotement (A).

5. Laser de bâtiment selon une des revendications précédentes, **caractérisé en ce que** le socle (7) est conformé en plaque disposée d'un côté, respectivement des deux côtés perpendiculairement à l'axe de pivotement (A) et, optionnellement, recouvre le boîtier (2) dans au moins une position de pivotement.

6. Laser de bâtiment selon une des revendications précédentes, **caractérisé en ce que** le socle (7) est constitué d'un matériau indéformable, résilient et absorbant l'énergie.

7. Laser de bâtiment selon une des revendications précédentes, **caractérisé en ce que** le socle (7) comporte un moyen de fixation (10) pour un montage temporaire.
